# EUROPEAN PATENT APPLICATION

(11) **EP 4 300 987 A1**
(43) Date of publication of application: **03.01.2024**
(21) Application number: 23182282.6
(22) Date of filing: 29.06.2023
(51) Int. Cl.: H04N 23/56, G03B 15/05, H04M 1/02, H04N 23/57, H04N 23/74

(54) **METHOD OF SUPPLEMENTAL LIGHTING FOR PHOTOGRAPHY AND AN ELECTRONIC DEVICE**

(30) Priority: 30.06.2022 CN 202210764542
(71) Applicant: Nothing Technology Limited, London EC2V 6EE (GB)
(72) Inventor: XU, Qi, Shenzhen City (CN)
(74) Representative: EIP

(57) **Abstract**

The present disclosure relates to a method of supplemental lighting for photography and an electronic device. The electronic device includes a display screen, a processor, a camera located at a back surface of the electronic device, and at least one lighting unit. The camera is used for capturing shooting images. The method includes: after opening a camera software, determining luminous information of the at least one lighting unit for supplemental lighting for photography; and controlling at least part of the at least one lighting unit to emit light for supplemental lighting in accordance with the luminous information when shooting is performed.

## Description

### TECHNICAL FIELD

The present disclosure relates to the fields of electronic technology, in particular to a method of supplemental lighting for photography shooting and an electronic device.

### BACKGROUND

With the diversification of functions in electronic devices, the photography function (i.e. taking photos and/or videos) has become a necessary function for most electronic devices. However, the existing method of supplemental lighting for the photography function in an electronic device is usually to control a flash light near a camera in the electronic device to fill light, which is relatively simple and difficult to meet the needs of filling the light when shooting a photo.

### SUMMARY

The present discloses provides a method of supplemental lighting for photography (i.e. taking photos and/or videos) and an electronic device, which can meet the diverse needs of users for supplemental lighting when shooting photos.

Embodiments of the present disclosure provide a method of supplemental lighting for photography, applied to an electronic device. The electronic device includes a camera, at least one lighting unit and a transparent cover. The camera and the at least one lighting unit are both located on a back surface of the electronic device. The transparent cover covers the camera and the at least one lighting unit. The transparent cover is capable of transmitting light emitted by the at least one lighting unit. The method includes: after opening a camera software, determining a luminous information of the at least one lighting unit of supplemental lighting for shooting; controlling, in accordance with the luminous information, at least part of the at least one lighting unit to emit light for supplemental lighting when shooting is performed.

Embodiments of the present disclosure provide an electronic device. The electronic device includes a display screen, a camera, a transparent cover, at least one lighting unit and a processor. The camera is located on a back surface of the electronic device, and is used for capturing shooting images. The transparent cover is used to cover the camera and the at least one lighting unit. The transparent cover is capable of transmitting light emitted by the at least one lighting unit. The processor is used to perform the method of supplemental lighting for photography provided by embodiments of the present disclosure.

The present disclosure provides a method of supplemental lighting for photography and an electronic device, in which at least one part of the at least one lighting unit is controlled to provide supplemental lighting when shooting is performed, instead of controlling a single flash light for supplemental lighting, so as to provide better supplemental lighting when shooting photos and meet the diversified needs of users for supplemental lighting when shooting is performed.

### BRIEF DESCRIPTION OF THE ACCOMPANYING DRAWINGS

In order to illustrate more clearly technical solutions of embodiments of the present disclosure, the following is a brief description of the accompanying drawings that need to be used in the description of the embodiments.
FIG. 1 shows a schematic diagram of a composition of an electronic device in accordance with an embodiment of the present disclosure;
FIG. 2 shows a flowchart of a method of supplemental lighting for shoot in accordance with an embodiment of the present disclosure;
FIG. 3 shows a sub-flowchart of block 201 in FIG. 2 in accordance with an embodiment of the present disclosure;
FIG. 4 shows a sub-flowchart of block 201 in FIG. 2 in accordance with another embodiment of the present disclosure;
FIG. 5 shows a sub-flowchart of block 201 in FIG. 2 in accordance with another embodiment of the present disclosure;
FIG. 6 shows a structural schematic diagram of a back surface of the electronic device in accordance with an embodiment of the present disclosure; and
FIG. 7 shows a partial structural schematic diagram of the electronic device in accordance with another embodiment of the present disclosure.

### DETAILED DESCRIPTION OF ILLUSTRATED EMBODIMENTS

The technical solutions in embodiments of the present disclosure will be clearly and completely described below with reference to the accompanying drawings.

It should be understood that, when used in this specification and the attached claims, the terms "include" and "comprise" indicate a presence of the described features, wholes, steps, operations, elements and/or components, but do not exclude a presence or an addition of one or more other features, wholes, steps, operations, elements, components and/or a combination thereof.

It should also be understood that the terms used herein in the specification of the present disclosure are used for the purpose of describing particular embodiments and are not intended to limit the present disclosure. As used in the specification of the present disclosure and the attached claims, unless the context clearly indicates, otherwise the singular forms "one", "a" and "the" are intended to include a plural form.

It should further be understood that the term "and/or" as used in the specification of the present disclosure and the attached claims refers to any and all possible combinations of one or more of the items listed in association, and includes such combinations.

Embodiments of the present disclosure provide a method of supplemental lighting for shoot, and an electronic device. The method of supplemental lighting for shoot is applied to an electronic device.

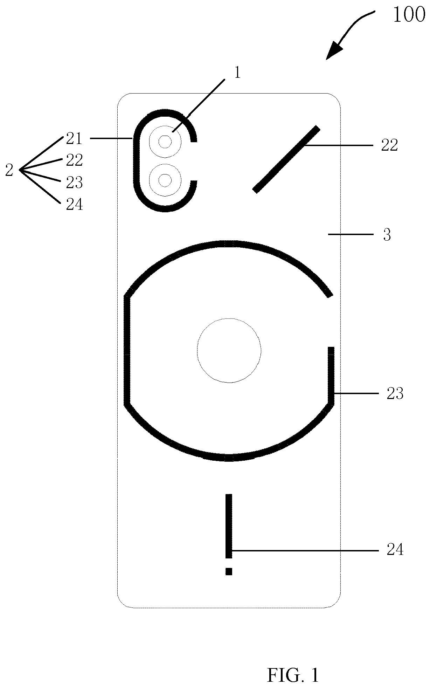

Referring to FIG. 1, FIG. 1 shows a schematic diagram of a composition of an electronic device in accordance with an embodiment of the present disclosure.

The electronic device 100 includes a camera 1, at least one lighting unit 2 and a transparent cover 3. The camera 1 and the at least one lighting unit 2 are both located on a back surface of the electronic device 100. The transparent cover 3 covers the camera 1 and the at least one lighting unit 2. The transparent cover 3 is capable of transmitting light emitted by the at least one lighting unit 2. The lighting unit 2 is an LED light strip or a plurality of LED lamps set in succession. The transparent cover 3 overall covers the back surface of the electronic device 100. The transparent cover 3 covers the other areas of the back surface of the electronic device 100 in addition to covering the camera 1 and the at least one lighting unit 2.

The back surface of the electronic device 100 is a surface opposite to the display screen of the electronic device 100.

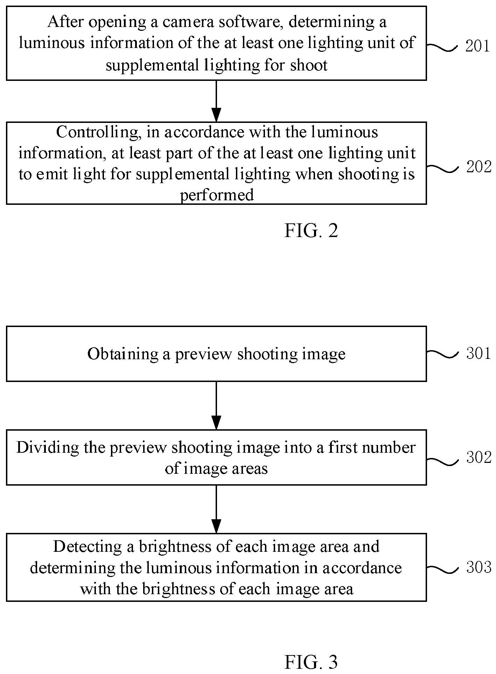

Referring to FIG. 2, FIG. 2 shows a flowchart of a method of supplemental lighting for shoot in accordance with an embodiment of the present disclosure.

Block 201, after opening a camera software, a luminous information of the at least one lighting unit of supplemental lighting for shoot is determined. The luminous information includes lighting areas and/or luminous parameters. The luminous parameters include at least one of brightness and colour temperature.

Block 202, at least part of the at least one lighting unit is controlled to emit light for supplemental lighting when shooting is performed in accordance with the luminous information.

Therefore, the present disclosure provides a method of supplemental lighting for shoot and, in which after a luminous information of supplemental lighting for shoot is determined, at least one lighting unit emits light to provide supplemental lighting when shooting is performed, instead of controlling a single flash light for supplemental lighting, so as to provide better supplemental lighting when shooting is performed, thereby making a better supplemental lighting effect and meeting the diversified needs of users for supplemental lighting when shooting is performed.

In some embodiments, the opening the camera software may include: opening the camera software in response to an operation of opening the camera software. The operation may include an operation of clicking on an application icon of the camera software, an operation of opening a shoot function of a certain functional software, etc.

The camera software is a software available for shooting in the electronic device 100.

The at least one lighting unit 2 includes a plurality of lighting units 2. The plurality of lighting units 2 are located on different areas of the back surface of the electronic device 100, and the different areas are not overlapped.

The lighting area may be a lighting unit selected to emit light, or may be part of a lighting area of the lighting unit selected to emit light.

Determining a luminous information of the at least one lighting unit of supplemental lighting for shoot, may include: determining the selected lighting unit 2 for supplemental lighting and its corresponding luminous parameters, or, determining the luminous parameters, or determining the lighting area. Controlling, in accordance with the luminous information, at least part of the at least one lighting unit to emit light for supplemental lighting when shooting is performed, may include: controlling the determined selected lighting unit 2 for supplemental lighting to emit light with the corresponding luminous parameters when the selected lighting unit 2 for supplemental lighting and its corresponding luminous parameters are determined; or, controlling all the lighting units 2 to emit light with the determined corresponding luminous parameters when the luminous parameters are determined; or, controlling the determined corresponding lighting area to emit light with the default luminous parameters when the lighting area is determined.

Referring to FIG. 3, FIG. 3 shows a sub-flowchart of block 201 in FIG. 2 in accordance with an embodiment of the present disclosure.

Block 301, a preview shooting image is obtained.

Block 302, the preview shooting image is divided into a first number of image areas.

Block 303, a brightness of each image area is detected and the luminous information is determined in accordance with the brightness of each image area.

In detail, in some embodiments, each image area corresponds to a preset brightness; each image area corresponds to a certain lighting area. The lighting area corresponding to each image area can be a certain lighting unit or a a part lighting area of a lighting unit. Determining the luminous information in accordance with the brightness of each image area, includes: determining whether a brightness of each image area is less than its corresponding preset brightness; determining the corresponding lighting area in accordance with a correspondence between the preset image areas and the preset lighting areas when the brightness of the image area is less than its corresponding preset brightness; and determining the luminous parameters of the corresponding lighting area of the image area in accordance with a difference between a brightness of the current image area and its corresponding preset brightness. Then, at least part of the at least one lighting unit 2 is controlled to emit light in accordance with the determined luminous information, so that the image area with less brightness is supplemented with light.

The preview shooting image is a shooting image currently captured by the camera 1. The electronic device 100 further includes a display screen. When the camera software is opened, the preview shooting image is displayed in the display screen.

In some embodiments, the first number is a parameter obtained in accordance with the preview shooting image. In other embodiments, the first number is a preset fixed parameter value.

Therefore, the embodiments of the present disclosure provide a method of supplemental lighting for photography (i.e. taking photos and/or videos). The method is able to determine different luminous information according to the brightness of different image areas in the preview shooting image, i.e., determine, in accordance with the brightness of different image areas in the preview shooting image, the lighting unit to be used for supplemental lighting and its lighting brightness and colour temperature. Furthermore, the selected lighting unit to be used for supplemental lighting is controlled to emit light with the corresponding brightness and colour temperature. Compared to the prior art where the flash light near camera 1 in electronic device 100 is controlled singularly to fill light, the method of supplemental lighting for shoot provided by this embodiment of the present disclosure can be tailored to the conditions of the different preview shooting image. For example, when the brightness of a certain image area is detected to be darker, the corresponding lighting unit 2 is controlled to emit light at a certain brightness and colour temperature, and the darker image area is targeted to be supplemental lighting, while the originally brighter or appropriately bright position will not have much change. Therefore, the method of supplemental lighting for shoot provided by embodiments of the present disclosure enables a multiplicity of supplemental lighting effects to be achieved during shooting, and the supplemental lighting effect is better, meeting the diversified supplemental lighting needs of users when shooting is performed.

In some embodiments, the method further includes: extracting image features in the preview shooting image.

Dividing the preview shooting image into a first number of image areas, includes: dividing the preview shooting image into a first number of image areas in accordance with the image features in the preview shooting image; the first number is derived from the image features in the preview shooting image.

The image features include characters, objects and scenes. The characters, objects and scenes can be recognized in the preview shooting image.

Specifically, in some embodiments, when the image features in the preview shooting image include characters and scenes, each image area divided in the preview shooting image may be separate characters or scenes; each image area corresponds to a different preset brightness; a preset brightness of the image area including the characters is greater than a preset brightness of the image area including the scenes; each image area also corresponds to a certain lighting area. The lighting area corresponding to each image area may be a certain lighting unit or a lighting area of a part of the lighting unit. Determining the luminous information in accordance with the brightness of each image area, includes: determining whether the brightness of each image area is less than its corresponding preset brightness; determining the corresponding lighting area, in accordance with a correspondence between the preset image areas and lighting areas, when the brightness of the image area is less than its corresponding preset brightness; and determining luminous parameters of the lighting area corresponding to the image area in accordance with the difference between a brightness of the current image area and its corresponding preset brightness. Therefore, at least part of at least one lighting unit 2 is controlled to emit light in accordance with the determined luminous information, which enables the brightness of the characters in the preview shooting image is greater than the brightness of the scene in the preview shooting image.

Therefore, the method of supplemental lighting for shoot provided by embodiments of the present disclosure is able to determine different luminous information according to the brightness and the image features of different image areas in the preview shooting image, and control the selected lighting unit 2 for supplemental lighting to emit light at a corresponding brightness and colour temperature. For example, if the image features in the current preview shooting image include characters and scenes, and the brightness of the image area including the characters and scenes is darker, the corresponding lighting unit 2 is controlled to emit light at a certain brightness and colour temperature, and the amount of supplemental lighting for the image area including characters with darker brightness is targeted to be greater than the amount of supplemental lighting for the image area including scenes with darker brightness, thus making the image presented in the the preview shooting image have a better supplemental lighting effect and more aesthetically pleasing. Therefore, the method of supplemental lighting for shoot provided by embodiments of the present disclosure is thus able to meet the diverse supplemental lighting needs of the user when shooting is performed.

In some other embodiments, dividing the preview shooting image into a first number of image areas, includes: dividing the preview shooting image into a first number of image areas in accordance with a preset area dividing way. The first number is a preset value.

The preset area dividing way includes dividing the preview shooting image into equal rectangular image areas.

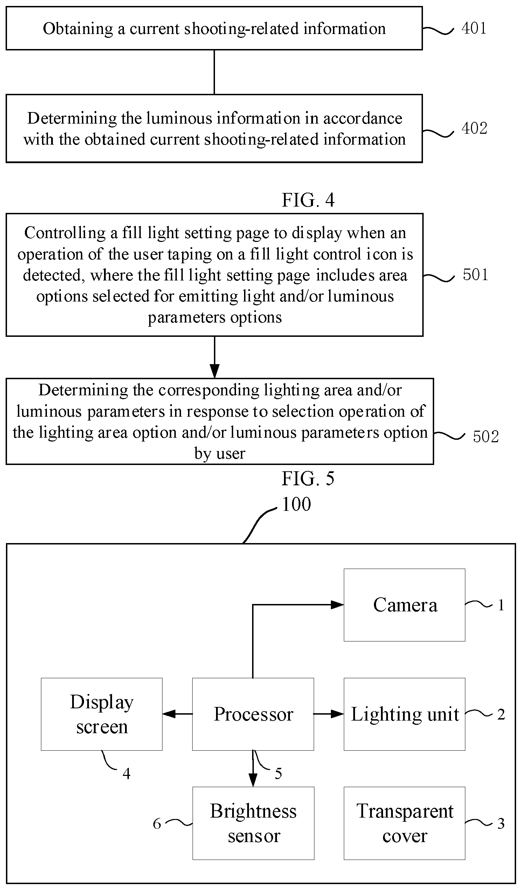

Referring to FIG. 4, FIG. 4 shows a sub-flowchart of block 201 in FIG. 2 in accordance with another embodiment of the present disclosure;

Block 401, a current shooting-related information is obtained.

Block 402, the luminous information is determined in accordance with the obtained current shooting-related information.

The shooting-related information includes at least one of an ambient brightness, a subject being shot and a shooting scene. The ambient brightness is the ambient brightness of a current shooting. The subject being shot is characters, scenes or objects, the characters, scenes or objects are currently being shot. The shooting scene includes a character shooting mode, a scene shooting mode or an object shooting mode.

In some embodiments, the block 402 "determining the luminous information in accordance with the obtained current shooting-related information" may include: determining, in accordance with the obtained current shooting-related information and a correspondence between the shooting-related information and the luminous information, the luminous information corresponding to the shooting-related information.

In some embodiments, when the shooting-related information includes the ambient brightness, there is a correspondence between the difference between the current ambient brightness and the preset ambient brightness, and the lighting area and luminous parameters selected for emitting light. Determining the luminous information in accordance with the obtained current shooting-related information, includes: determining the lighting area selected for emitting light and luminous parameters selected for emitting light in accordance with the difference between the ambient brightness and the preset ambient brightness when the ambient brightness is less than the preset ambient brightness.

In some embodiments, when the shooting-related information includes the subject being shot, there is a correspondence between the type of current subject being shot and the lighting area and luminous parameters selected for emitting light. For example, the plurality of the lighting area selected for emitting light when the subject being shot is characters is higher than the plurality of the lighting area selected for emitting light when the subject being shot is scenes; the brightness in the selected luminous parameters when the subject being shot is characters is brighter than the brightness in the selected luminous parameters when the subject being shot is scenes. Determining the luminous information in accordance with the obtained current shooting-related information, includes: determining the lighting area selected for emitting light and luminous parameters selected for emitting light in accordance with the type of the current subject being shot.

In some embodiments, when the shooting-related information includes the shooting scene, there is a correspondence between the current shooting scene, the lighting area selected for emitting light, and luminous parameters selected for emitting light; for example, the shooting scene includes night scene, day scene, etc.. The plurality of lighting areas selected for emitting light when the shooting scene is a night scene is higher than the plurality of lighting areas selected for emitting light when the shooting scene is a night scene. The brightness in the selected luminous parameters when the shooting scene is a night scene is brighter than the brightness in the selected luminous parameters when the shooting scene is a day scene. Determining the luminous information in accordance with the obtained current shooting-related information, includes: determining the lighting area selected for emitting light and luminous parameters selected for emitting light in accordance with the type of the subject being shot.

Therefore, the method of supplemental lighting for photography provided by one embodiment of the present disclosure further determines the luminous information in accordance with at least one of the ambient brightness, the subject being shot and the shooting scene; and controls at least part of the at least one lighting unit 2 to emit light in accordance with the luminous information. Thus, the supplementary lighting effect presented in the preview shooting image is better than the supplementary lighting effect obtained by controlling a single flash light. Thus, the embodiment of the present disclosure provides the method of supplemental lighting for shoot, and the method meets the diverse supplemental lighting needs of the user when shooting is performed.

In some embodiments, when the shooting related information includes the ambient brightness, the obtaining the current shooting related information includes: detecting the current ambient brightness by a brightness sensor.

In some embodiments, when the shooting related information includes a subject being shot, the obtaining current shooting related information includes: recognizing the subject being shot by recognizing the preview shooting image.

In some embodiments, when the shooting related information includes a shooting scene, the obtaining current shooting related information includes: determining the shooting scene set by the user, and obtaining the shooting scene in response to a setting operation of the shooting scene by user.

Determining the shooting scene set by the user and obtaining the shooting scene in response to a user setting operation of the shooting scene, includes: detecting whether there is an operation of the user taping on the shooting scene setting icon; controlling a display of a shooting scene setting page when the operation of the user taping on the shooting scene setting icon is detected, and where the shooting scene setting page includes options for different shooting scenes; detecting whether there is an operation of the user taping on any of the options for shooting scenes in the shooting scene setting page; and determining the current shooting scene in accordance with the options for shooting scenes selected by the user when the operation of the user taping on any of the options for shooting scenes in the shooting scene setting page is detected.

In some further embodiments, the determining luminous information includes: determining the luminous information in response to a setting operation for luminous information by user. The blocks of "determining the luminous information in response to a user's setting operation for luminous information" is referred to FIG. 5. FIG. 5 shows a sub-flowchart of block 201 in FIG. 2 in accordance with another embodiment of the present disclosure.

Block 501, a fill light setting page is controlled to display when an operation of the user taping on a fill light control icon is detected, where the fill light setting page includes area options selected for emitting light and/or luminous parameters options.

Block 502, the corresponding lighting area and/or luminous parameters are determined in response to selection operation of the lighting area option and/or luminous parameters option by user.

Therefore, the method of supplemental lighting for shoot provided by one embodiment of the present disclosure can determine the luminous information in accordance with the user selected shooting scene, the detected ambient brightness and the subject being shot.

When the user selects the option for the lighting area and the option for the luminous parameters, determining the current luminous information includes: determining the selected lighting unit 2 for supplemental lighting and the selected corresponding luminous parameters to be the current luminous information.

When the user selects the lighting area option, determining the current luminous information includes: determining the selected lighting unit 2 for supplemental lighting and the default luminous parameters to be the current luminous information.

When the user selects the luminous parameters option, determining the current luminous information includes: determining all of the lighting units 2 and the selected luminous parameters to be the current luminous information.

In some embodiments, the at least one lighting unit 2 includes a first lighting unit 23, a second lighting unit 21, a third lighting unit 22 and a fourth lighting unit 24. The setting areas of the first lighting unit 23, the second lighting unit 21, the third lighting unit 22 and the fourth lighting unit 24 on the back surface of the electronic device 100 do not overlap. The aforementioned determining the selected lighting unit 2 or lighting area for supplemental lighting may include: determining at least one of the first lighting unit 23, the second lighting unit 21, the third lighting unit 22 and the fourth lighting unit 24 to be the lighting unit 2, or determining an area of at least one of the first lighting unit 23, the second lighting unit 21, the third lighting unit 22 and the fourth lighting unit24 to be the lighting area.

The at least one lighting unit 2 may also include any combination of at least two lighting units 2. The plurality of lighting units 2 may form a set pattern. The user may customize the selection of the combination of the lighting unit. Each lighting unit 2 or combination thereof may activate a different lighting pattern according to a set control signal.

In some embodiments, the first lighting unit 23 is located in a middle area of a back surface of the electronic device 100 and is in a form of an unclosed ring or a closed ring. The second lighting unit 21 is in a form of an unclosed ring or a closed ring. The third lighting unit 22 is in a shape of a straight line. The fourth lighting unit 24 is in a shape of an exclamation mark or in a shape of a "1".

Referring to FIG. 6, FIG. 6 shows a structural schematic diagram of a back surface of the electronic device in accordance with an embodiment of the present disclosure.

The electronic device 100 includes a camera 1, a transparent cover 3, a display screen 4, a processor 5 and at least one lighting unit 2.

The camera 1 and the at least one lighting unit 2 are located on the back surface of the electronic device 100, the camera 2 is used to capture images during a shooting process so as to obtain shooting images. The transparent cover 3 is used to cover the camera 1 and the at least one lighting unit 2. The transparent cover 3 is able to transmit light emitted by the at least one lighting unit 2. The processor 5 is used to perform the method of supplemental lighting for shoot provided by embodiments of the present disclosure.

The display screen 4 is located on a front surface of the electronic device 100. The camera 1, the transparent cover 3 and the lighting unit 2 are both located on the back surface of the electronic device 100. The processor 5 is located inside the electronic device 100. The back surface of the electronic device 100 is a surface opposite to the display screen 4 of the electronic device 100.

The number and shapes of the at least one lightning unit 2 are adjusted according to the actual situation.

In some embodiments, the lighting unit 2 is an LED light strip or a plurality of LED lamps set in succession.

The processor 5 is used to perform the method of supplemental lighting for shoot provided by embodiments of the present disclosure, for example, after the camera software is opened in response to an operation of opening the camera software, the processor 5 is used to determine luminous information of the at least one lighting unit 2 of supplementary lighting for shoot, and control at least part of the at least one lighting unit 2 to emit light in accordance with the luminous information to perform supplementary lighting when shooting is performed. The luminous information includes a lighting area and/or luminous parameters. The luminous parameters includes at least one of brightness and colour temperature.

In some embodiments, the processor 5 is used to determine luminous information of the at least one lighting unit 2 of supplementary lighting for shoot, may include: the processor 5 obtains a preview shooting image, the preview shooting image is a current shooting image captured by the camera 1; the processor 5 divides the preview shooting image into a first number of image areas; the processor 5 detects a brightness of each image area and determines the luminous information in accordance with the brightness of each image area.

The processor 5 is further used to extract image features in the preview shooting image. The processor 5 dividing the preview shooting image into a first number of image areas, includes: the processor 5 divides the preview shooting image into a first number of image areas in accordance with the image features in the preview shooting image; the first number is derived from the image features in the preview shooting image. The image features include characters, objects and scenes. The characters, objects and scenes can be recognized in the preview shooting image.

The processor 5 dividing the preview shooting image into a first number of image areas, may include: the processor 5 divides the preview shooting image into a first number of image areas in accordance with a preset area dividing way. The first number is a preset value.

In another embodiment, the processor 5 determining the luminous information of at least one lighting unit 2 of supplementary lighting for shoot, may further include: the processor 5 obtains a current shooting-related information, determines the luminous information in accordance with the obtained current shooting-related information. The shooting-related information includes at least one of an ambient brightness, a subject being shot and a shooting scene.

The processor 5 determining the luminous information in accordance with the obtained current shooting-related information includes: the processor 5 determines a target fill light amount in accordance with the object being shot and the shooting scene; and determines the luminous information in accordance with the target fill light amount and the current ambient brightness.

When the shooting-related information includes the ambient brightness, the processor 5 obtaining the current shooting-related information, includes: the processor 5 detects the current ambient brightness by a brightness sensor 6. When the shooting-related information includes the subject being shot, the processor 5 obtaining the current shooting-related information, includes: the processor 5 recognize the preview shooting image so as to recognize the subject being shot. When the shooting related information includes the shooting scene, the processor 5 obtaining the current shooting related information includes: the processor 5 determines the shooting scene set by the user and obtains the shooting scene in response to a setting operation of the shooting scene by user.

In another embodiment, the processor 5 determining the luminous information in response to a setting operation for luminous information by user, includes: the processor 5 controls a fill light setting page to display when an operation of the user taping on a fill light control icon is detected, where the fill light setting page includes area options selected for emitting light and/or luminous parameters options; determines the corresponding lighting area and/or luminous parameters in response to a selection operation of the lighting area option and/or luminous parameters option by user.

In some embodiments, the at least one lighting unit 2 includes a plurality of lighting units 2. The setting area of the plurality of lighting units 2 on the back surface of the electronic device 100 do not overlap. The processor 5 controlling at least part of the at least one lighting unit 2 to emit light in accordance with the luminous information, includes: the processor 5 determines, in accordance with the luminous information, the lighting unit 2 of the plurality of light units selected for supplementary lighting, and the luminous parameters of the lighting unit 2 selected for supplementary lighting, and controls the selected lighting unit 2 to emit light for supplementary lighting at the corresponding luminous parameters.

Therefore, the electronic device 100 provided by this embodiment of the present disclosure is able to control at least one of the lighting unit 2 to emit light with corresponding luminous parameters when shooting is performed according to different situations, instead of only being able to control a single flash light to fill the light, it allows for diversification supplementary lighting effects to be used when shooting is performed, making it more effective and satisfying the user's needs for diversification supplementary lighting effects when shooting is performed.

In some embodiment, referring to FIG. 1, as previously mentioned, the at least one lighting unit 2 includes a first lighting unit 23, a second lighting unit 21, a third lighting unit 22 and a fourth lighting unit 24. The setting areas of the first lighting unit 23, the second lighting unit 21, the third lighting unit 22 and the fourth lighting unit24 on the back surface of the electronic device 100 do not overlap. The at least one lighting unit 2 may also include any combination of at least two lighting units 2. The plurality of lighting units 2 may form a set pattern. The user may customize the selection of the combination of the lighting unit. Each lighting unit 2 or combination thereof may activate a different lighting pattern according to a set control signal.

In some embodiments, the first lighting unit 23 is located in a middle area of a back surface of the electronic device and is in a form of an unclosed ring or a closed ring. The second lighting unit 21 is in a form of an unclosed ring or a closed ring. The third lighting unit 22 is in a shape of a straight line. The fourth lighting unit 24 is in a shape of an exclamation mark or in a shape of a "1".

The first lighting unit 23, the second lighting unit 21, the third lighting unit 22 and the fourth lighting unit 24 are LED light strips or a plurality of LED lamps set in succession.

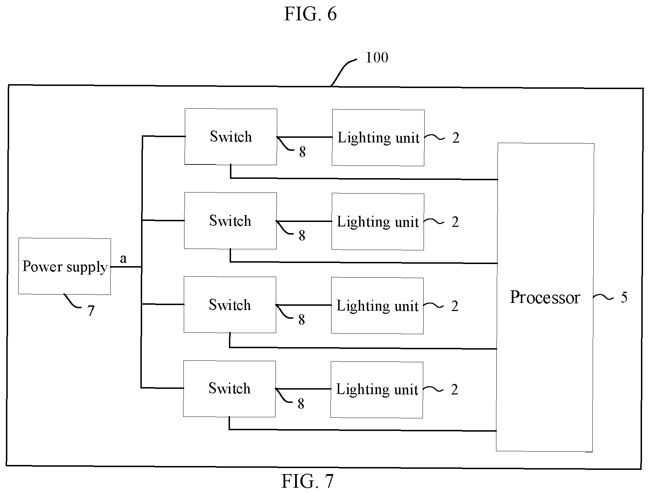

Referring to FIG. 7, FIG. 7 shows a partial structural schematic diagram of the electronic device in accordance with another embodiment of the present disclosure.

In some embodiments, as shown in FIG. 7, the electronic device 100 further includes a power supply 7 and a plurality of switches 8. The power supply 7 includes an output end a. The plurality of switches 8 are connected between the output end a and the plurality of lighting units 2 / the plurality of light strips. The processor 5 controls the switch 8, which causes the corresponding lighting unit 2/ light strip to become electrically lighted.

Furthermore, any of the above-mentioned lighting units 2 may also include a plurality of areas, each of which may be individually connected to the output end a of the power supply 7 via a switch 8. The currently determined lighting area in the luminous information is a certain part of a light strip, the processor 5 also controls the switch 8 corresponding to the lightning area to turn on so that the lighting area can be powered on.

The switch 8 may be a MOS tube, a triode, etc., and the processor 5 regulates the current by controlling a conduction degree of the switch 8, thereby changing the luminous brightness or colour temperature of the lighting area.

It will be understood by a person of ordinary skill in the art that all or some of the steps in the various methods of supplemental lighting for shoot of the above embodiments can be accomplished by the processor 5 in the electronic device 100 provided by embodiments of the present disclosure. The electronic device 100 provided by embodiments of the present disclosure can be described with reference to the method of supplemental lighting for shoot provided by embodiments of the present disclosure as described above.

The above description, which is only a specific embodiment of the present disclosure, is not limited to the protecting scope of the present disclosure, and any variation or substitution that can be readily thought of by any person skilled in the art within the technical scope disclosed by the present disclosure shall be covered by the protecting scope of the present disclosure; the embodiments of the present disclosure and the features in the embodiments may be combined with each other, provided that there is no conflict. Therefore, the protecting scope of the present disclosure shall be governed by the protecting scope of the claims.

The following clauses define further statements of invention:
1. A method of of supplemental lighting for shoot, applied to an electronic device, wherein, the electronic device comprises a camera, at least one lighting unit and a transparent cover; the camera and the at least one lighting unit are both located on a back surface of the electronic device; the transparent cover covers the camera and the at least one lighting unit; the transparent cover is capable of transmitting light emitted by the at least one lighting unit, the method comprises: after opening a camera software, determining a luminous information of the at least one lighting unit of supplemental lighting for shoot; the luminous information comprising lighting area and/or luminous parameters; the luminous parameters comprising at least one of brightness and colour temperature; controlling, in accordance with the luminous information, at least part of the at least one lighting unit to emit light for supplemental lighting when shooting is performed.
2.The method according to clause 1, wherein determining the luminous information of the at least one lighting unit of supplemental lighting for shoot, comprises: obtaining a preview shooting image, wherein the preview shooting image is a shooting image currently captured by the camera; dividing the preview shooting image into a first number of image areas; detecting a brightness of each image area and determining the luminous information in accordance with the brightness of each image area.
3. The method according to clause 2, wherein the method further comprises: extracting image features in the preview shooting image; and dividing the preview shooting image into a first number of image areas comprises: dividing the preview shooting image into a first number of image areas in accordance with the image features in the preview shooting image; wherein the first number is derived from the image features in the preview shooting image.
4. The method according to clause 3, wherein the image features comprise characters, objects and scenes, and the characters, objects and scenes can be recognized in the preview shooting image.
5. The method according to clause 2, wherein dividing the preview shooting image into a first number of image areas comprises: dividing the preview shooting image into a first number of image areas in accordance with a preset area dividing way, wherein the first number is a preset value.
6. The method according to clause 1, wherein determining the luminous information of the at least one lighting unit of supplemental lighting for shoot, comprises: obtaining a current shooting-related information; determining the luminous information in accordance with the obtained current shooting-related information, wherein the shooting-related information comprises at least one of an ambient brightness, a subject being shot and a shooting scene.
7. The method according to clause 6, wherein determining the luminous information in accordance with the obtained current shooting-related information, comprises: determining, in accordance with the obtained current shooting-related information and a correspondence between the shooting-related information and the luminous information, the luminous information corresponding to the shooting-related information.
8. The method according to clause 6, wherein when the shooting-related information comprises the ambient brightness, obtaining the current shooting related information comprises: detecting a current ambient brightness by a brightness sensor; when the shooting related information comprises a subject being shot, obtaining the current shooting related information comprises: recognize the subject being shot by recognizing the preview shooting image; when the shooting related information comprises a shooting scene, obtaining current shooting related information comprises: determining the shooting scene set by the user, and obtaining the shooting scene in response to a setting operation of the shooting scene by user.
9. The method according to clause 1, wherein determining the luminous information of the at least one lighting unit of supplemental lighting for shoot, comprises: determining the luminous information in response to setting operation of luminous information by user.
10.The method according to clause 9, wherein the determining the luminous information in response to a user's setting operation of luminous information, comprises: controlling a fill light setting page to display when an operation of the user taping on a fill light control icon is detected, wherein the fill light setting page comprises area options selected for emitting light and/or luminous parameters options; determining corresponding lighting area and/or luminous parameters in response to selection operation of the lighting area option and/or luminous parameters option by user.
11.The method according to clause 1, wherein the at least one lighting unit comprises a plurality of lighting units, setting areas of the plurality of lighting units on the back surface of the electronic device do not overlap; controlling at least part of the at least one lighting unit to emit light for supplemental lighting, comprises: determining, in accordance with the characters, objects and scenes, lighting unit of the plurality of light units selected for supplementary lighting, and the luminous parameters of the lighting unit selected for supplementary lighting, and controlling the selected lighting unit to emit light for supplementary lighting at the corresponding luminous parameters.
12.An electronic device, wherein, the electronic device comprises: a display screen; a camera, located on a back surface of the electronic device, being used for capturing shooting images; at least one lighting unit; a transparent cover, configured for covering the camera and the at least one lighting unit, the transparent cover being capable of transmitting light emitted by the at least one lighting unit; a processor, being configured to execute the method of supplemental lighting for photography according to any one of clauses 1~11.
13. The electronic device according to clause 12, wherein the at least one lighting unit comprises a first lighting unit, a second lighting unit, a third lighting unit and a fourth lighting unit, setting areas of the first lighting unit, the second lighting unit, the third lighting unit and the fourth lighting unit on the back surface of the electronic device do not overlap.
14.The electronic device according to clause 13, wherein the first lighting unit is located in a middle area of a back surface of the electronic device and is in a form of an unenclosed ring or a closed ring; the second lighting unit is in a form of an unenclosed ring or a closed ring; the third lighting unit is in a shape of a straight line; the fourth lighting unit is in a shape of an exclamation mark or in a shape of a "1".

## Claims

1. A method of supplemental lighting for photography, applied to an electronic device, wherein the electronic device comprises a camera, at least one lighting unit and a transparent cover; the camera and the at least one lighting unit are both located on a back surface of the electronic device; the transparent cover covers the camera and the at least one lighting unit; the transparent cover is capable of transmitting light emitted by the at least one lighting unit, the method comprising:
after opening a camera software, determining luminous information for the at least one lighting unit for supplemental lighting for shooting; the luminous information comprising a lighting area and/or luminous parameters; the luminous parameters comprising at least one of a brightness and a colour temperature;
controlling, in accordance with the luminous information, at least part of the at least one lighting unit to emit light for supplemental lighting when shooting is performed.

2. The method according to claim 1, wherein determining the luminous information for the at least one lighting unit for supplemental lighting for shooting , comprises:
obtaining a preview shooting image, wherein the preview shooting image is an image currently captured by the camera;
dividing the preview shooting image into a first number of image areas;
detecting a respective brightness of each image area and determining the luminous information in accordance with the brightness of each image area.

3. The method according to claim 2, wherein the method further comprises:
extracting image features in the preview shooting image; and
wherein dividing the preview shooting image into a first number of image areas comprises:
dividing the preview shooting image into the first number of image areas in accordance with the image features in the preview shooting image; wherein the first number is derived from the image features in the preview shooting image.

4. The method according to claim 3, wherein the image features comprise characters, objects, and/or scenes; and wherein the characters, objects and/or scenes can be recognized in the preview shooting image.

5. The method according to claim 2, wherein dividing the preview shooting image into the first number of image areas comprises:
dividing the preview shooting image into the first number of image areas in accordance with a preset area dividing method, wherein the first number is a preset value.

6. The method according to any preceding claim, wherein determining the luminous information for the at least one lighting unit for supplemental lighting for shooting, comprise:
obtaining current shooting-related information;
determining the luminous information in accordance with the obtained current shooting-related information, wherein the current shooting-related information comprises at least one of: an ambient brightness, a subject being shot, and a shooting scene.

7. The method according to claim 6, wherein determining the luminous information in accordance with the obtained current shooting-related information, comprises:
determining the luminous information in accordance with the obtained current shooting-related information and a correspondence between the current shooting-related information and the luminous information, the luminous information corresponding to the current shooting-related information.

8. The method according to claim 6 or claim 7, wherein:
when the current shooting-related information comprises the ambient brightness, obtaining the current shooting related information comprises:
detecting the current ambient brightness by a brightness sensor;
when the current shooting-related information comprises the subject being shot, obtaining the current shooting-related information comprises:
recognizing the subject being shot in the preview shooting image; and
when the shooting related information comprises the shooting scene, obtaining the current-shooting related information comprises:
determining the shooting scene set by a user, the shooting scene obtained in response to a setting operation of the shooting scene by the user.

9. The method according to any preceding claim, wherein determining the luminous information of the at least one lighting unit of supplemental lighting for shoot comprises:
determining the luminous information in response to a setting operation of luminous information by a or the user.

10. The method according to claim 9, wherein determining the luminous information in response to the setting operation comprises:
controlling a fill light setting page to display when an operation of the user taping on a fill light control icon is detected, wherein the fill light setting page comprises area options selected for emitting light and/or luminous parameters options;
determining corresponding lighting area and/or luminous parameters in response to selection operation of the lighting area option and/or luminous parameters option by the user.

11. The method according to any preceding claim, wherein the at least one lighting unit comprises a plurality of lighting units, wherein setting areas of the plurality of lighting units on the back surface of the electronic device do not overlap; and wherein controlling at least part of the at least one lighting unit to emit light for supplemental lighting comprises:
determining, in accordance with characters, objects and/or scenes, a lighting unit of the plurality of light units selected for supplementary lighting and luminous parameters for the lighting unit selected for supplementary lighting; and
controlling the selected lighting unit to emit light for supplementary lighting at the corresponding luminous parameters.

12. An electronic device, wherein, the electronic device comprises:
a display screen;
a camera for capturing shooting images, the camera located on a back surface of the electronic device;
at least one lighting unit;
a transparent cover, configured for covering the camera and the at least one lighting unit, the transparent cover being capable of transmitting light emitted by the at least one lighting unit; and
a processor configured to execute the method of supplemental lighting for photography according to any one of claims 1-11.

13. The electronic device according to claim 12, wherein the at least one lighting unit comprises a first lighting unit, a second lighting unit, a third lighting unit and a fourth lighting unit; and wherein setting areas of the first lighting unit, the second lighting unit, the third lighting unit and the fourth lighting unit on the back surface of the electronic device do not overlap.

14. The electronic device according to claim 13, wherein the first lighting unit is located in a middle area of the back surface of the electronic device and is in a form of an unclosed ring or a closed ring; the second lighting unit is in a form of an unclosed ring or a closed ring; the third lighting unit is in a shape of a straight line; and the fourth lighting unit is in a shape of an exclamation mark or in a shape of a "1".
